# EUROPEAN PATENT SPECIFICATION

(11) **EP 1 556 974 B1**
(45) Date of publication and mention of the grant of the patent: **24.06.2009**
(21) Application number: 03810706.6
(22) Date of filing: 06.11.2003
(51) Int. Cl.: H04B 7/26

(54) **AN UPLINK COMMON CHANNEL FOR SENDING FEEDBACK INFORMATION**
GEMEINSAMER AUFWÄRTSSTRECKENKANAL ZUM SENDEN VON RÜCKMELDEINFORMATIONEN
CANAL COMMUN DE LIAISON MONTANTE DESTINE A ENVOYER DES INFORMATIONS RETROACTIVES

(30) Priority: 07.11.2002 KR 20020068923
(43) Date of publication of application: 27.07.2005
(73) Proprietor: LG ELECTRONICS, INC., Seoul 150-010 (KR)
(72) Inventor: LEE, Young-Dae, 465-711 Hanam, Gyeonggi-Do (KR); YI, Seung-June, 135-240 Seoul (KR); LEE, So-Young, 435-050 Gunpo, Gyeonggi-Do (KR)
(74) Representative: Katérle, Axel
(86) International application number: PCT/KR2003/002365
(87) International publication number: WO 2004/042963

(56) References cited:
- EP-A- 0 999 656
- EP-A- 1 143 635
- WO-A-01/26397
- WO-A2-02/01893
- KR-A- 2002 000 649
- KR-A- 2003 032 875
- KR-A- 2003 068 741
- "3rd Generation Partnership Project; Technical Specification Group Services and System Aspects; Multimedia Broadcast/Multicast Service; Stage 1 (Release 6)" 3GPP TS 22.146 V6.0.0, XX, XX, June 2002 (2002-06), pages 1-15, XP002970529
- "Universal Mobile Telecommunications System (UMTS); Packet Data Convergence Protocol (PDCP) Specification (3GPP TS 25.323 version 3.6.0 Release 1999); ETSI TS 125 323" ETSI STANDARDS, EUROPEAN TELECOMMUNICATIONS STANDARDS INSTITUTE, SOPHIA-ANTIPO, FR, vol. 3-R2, no. V360, September 2001 (2001-09), XP014008762 ISSN: 0000-0001

## Description

### TECHNICAL FIELD

The present invention relates to providing wireless data services, such as multimedia broadcast and multicast services (MBMS), in a universal mobile telecommunication system (UMTS), whereby an uplink common channel is established and used for sending feedback information related to the data service.

### BACKGROUND ART

A universal mobile telecommunication system (UMTS) is a third generation mobile communication system that has evolved from a European standard known as Global System for Mobile communications (GSM), which aims to provide an improved mobile communication service based upon a GSM core network and wideband code division multiple access (W-CDMA) wireless connection technology.

In December 1998, the ETSI of Europe, the ARIB/TTC of Japan, the T1 of the United States, and the TTA of Korea formed the Third Generation Partnership Project (3GPP), which is currently creating a detailed specification for standardizing the UMTS.

The work towards standardizing the UMTS performed by the 3GPP has resulted in the formation of five technical specification groups (TSG), each of which is directed to forming network elements having independent operations.

More specifically, each TSG develops, approves, and manages a standard specification in a related region. Among them, a radio access network (RAN) group (TSG-RAN) develops a specification for the function, items desired, and interface of a UMTS terrestrial radio access network (UTRAN), which is a new RAN (i.e., radio interface network) for supporting a W-CDMA access technology in the UMTS.

The constituting elements of a UTRAN are: radio network controllers (RNCs), Node-Bs and user equipment (UE), such as a terminal. The RNCs enable autonomous radio resource management (RRM) by the UTRAN. The Node-B is based on the same principles as the GSM base station, being a physical element performing radio transmission/reception with cells. The UMTS UE is based on the same principles as the GSM mobile station (MS).

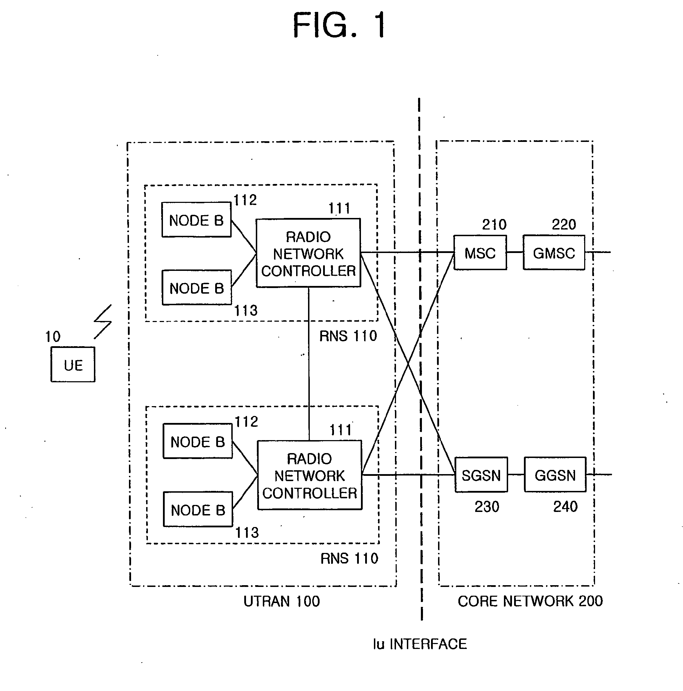

Figure 1 depicts the components of a typical UMTS network, whereby the UMTS generally comprises, among many other components, user equipment (UE) such as a terminal 10 (e.g., mobile station, user equipment and/or subscriber unit), a UTRAN 100 and a core network (CN) 200. The UMTS uses the same core network as that of general packet radio service (GPRS), but uses entirely new radio interfaces.

The UTRAN 100 includes one or more radio network sub-systems (RNS) 110. Each RNS 110 includes a radio network controller (RNC) 111 and one or more Node-Bs 112,113 managed by the RNCs 111. The RNCs 111 perform functions such as assigning and managing radio resources, and operate as access points with respect to the core network 200.

The Node-Bs 112,113 are managed by the RNCs 111, receive information sent by the physical layer of a terminal 10 through an uplink (UL: from terminal to network), and transmit data to a terminal 10 through a downlink (DL: from network to terminal). The Node-Bs 112,113 thus operate as access points of the UTRAN 100 for the terminal 10.

The core network 200 comprises, among other elements, a mobile switching center (MSC) 210 for supporting circuit switched (exchanged) services, a gateway mobile switching center (GMSC) 220, a serving GPRS support node (SGSN) 230 for supporting packet switched (exchanged) services, and a gateway GPRS support node (GGSN) 240.

A primary function of the UTRAN 100 is to establish and maintain a radio access bearer (RAB) for a call connection between the terminal 10 and the core network 200. The core network 200 applies end-to-end quality of service (QoS) requirements to the RAB, and the RAB supports the QoS requirements established by the core network 200. Accordingly, the UTRAN 100 can satisfy the end-to-end QoS requirements by establishing and maintaining the RAB.

The RAB service can be further divided into lower conceptual levels, namely, into an lu bearer service and a radio bearer service. The lu bearer service handles reliable user data transmissions between boundary nodes of the UTRAN 100 and the core network 200, while the radio bearer service handles reliable user data transmissions between the terminal 10 and the UTRAN 100.

The service provided to a particular terminal 10 is divided into circuit switched (circuit exchanged) service and packet switched (packet exchanged) service. For example, typical voice telephone service falls under circuit switched service, while web-browsing service via an Internet connection is classified as packet switched service.

To support circuit switched service, the RNC 111 connects with the MSC 210 of the core network 200, and the MSC 210 connects with the GMSC 220 that manages connections coming from or going out to other networks.

For packet switched service, the SGSN 230 and the GGSN 240 of the core network 200 provide appropriate services. For example, the SGSN 230 supports the packet communication going to the RNC 111, and the GGSN 240 manages the connection to other packet switched networks, such as an Internet network.

Between various network structure elements, there exists an interface that allows data to be exchanged for communication therebetween. The interface between the RNC 111 and the core network 200 is defined as the lu interface. The lu interface is referred to as "Iu-PS" if connected with the packet switched domain, and referred to as "Iu-CS" if connected with the circuit switched domain.

A description regarding a radio network temporary identifier (RNTI) will be made herebelow. The RNTI uses identification (discrimination) data of the terminal 10 while a connection between the terminal 10 and the UTRAN 100 is maintained. To do so, four types of RNTI, namely, a serving RNC RNTI (S-RNTI), a drift RNC RNTI (D-RNTI), a cell RNTI (C-RNTI), and a UTRAN RNTI (U-RNTI) are defined and used.

The S-RNTI is allocated by a servicing RNC (SRNC) (not shown) when a connection between the terminal 10 and the UTRAN 100 is established, and this becomes the data that allows discernment of the corresponding terminal 10 by the SRNC.

The D-RNTI is allocated by a drift RNC (DRNC) (not shown) when handovers between RNCs occur in accordance with the movement of the terminal 10.

The C-RNTI is the data that allows discernment of a terminal within the controlling RNC (CRNC) (not shown), and a terminal 10 is allotted a new C-RNTI value from the CRNC whenever the terminal 10 enters a new cell.

Finally, the U-RNTI comprises an SRNC identity and an S-RNTI, and because the SRNC manages the terminal 10 and because discernment data of a terminal 10 within the corresponding SRNC can be known, the U-RNTI can thus be considered to provide the absolute discernment data of a terminal 10.

When transmitting data using a common transport channel, a C-RNTI or a U-RNTI is included in the header of the medium access control (MAC) protocol data unit (MAC PDU) at the MAC-c/sh layer. A UE identification (ID) type indicator that indicates the type of RNTI that was included, is also included together in the header of the MAC PDU.

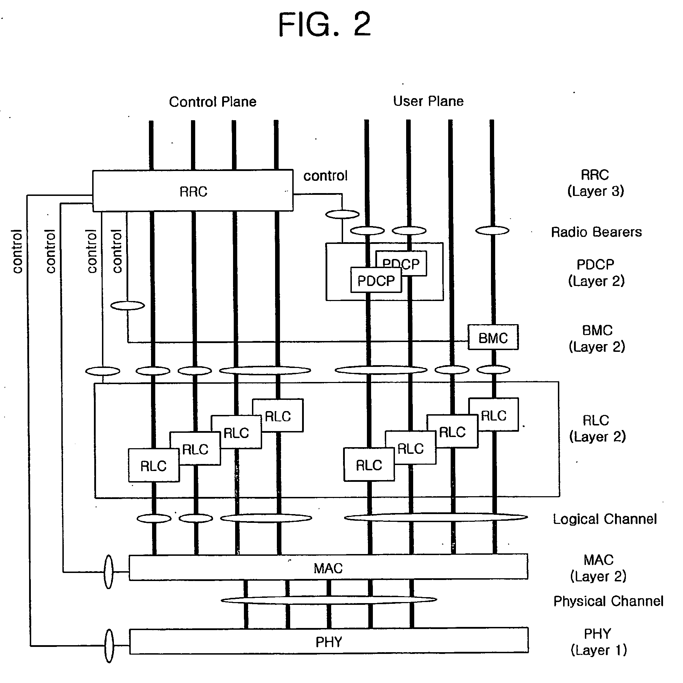

Figure 2 illustrates a radio access interface protocol structure between the terminal 10 and UTRAN 100 that is based upon the 3GPP wireless access network standards. Here, the radio access interface protocol has horizontal layers including a physical layer, a data link layer and a network layer, and has vertical planes including a user plane for transmitting data information and a control plane for transmitting control signals.

The user plane is a region through which traffic information of a user, such as voice data or Internet-protocol (IP) packets are transmitted. The control plane is a region through which control information, such as information of a network or information of maintenance and management of a call, is transmitted.

In Figure 2, protocol layers can be divided into a first layer (L1), a second layer (L2) and a third layer (L3) based upon the three lower layers of an open system interconnection (OSI) standard model that is well-known in the art of wireless (mobile) communication systems. Each layer shown in Figure 2 will now be described.

The first layer (L1) uses various radio transmission techniques to provide information transfer service to the upper layers. The first layer (L1) is connected via a transport channel to a medium access control (MAC) layer located at a higher level, and the data between the MAC layer and the physical layer is transferred via this transport channel.

Data is transmitted aligned to a transmission time interval (TTI) on the transport channel. The physical channel transfers data during frames, whereby a frame is a certain unit of time. In order to synchronize the transport channel between the UE (terminal 10) and the UTRAN 100, a connection frame number (CFN) is used. For all transport channels, excluding the paging channel, the range of the CFN value is between 0 to 255. That is, the CFN is repeated (circulated) by a period of 256 frames.

Besides the CFN, a system frame number (SFN) is used to synchronize the physical channel. The SFN value has a range of 0 to 4095 and is repeated (circulated) by a period of 4096 frames.

The MAC layer provides a re-allocation service of the MAC parameter for allocation and re-allocation of radio (wireless) resources.

The MAC layer is connected to an upper layer called a radio link control (RLC) layer through a logical channel, and various logical channels are provided according to the type of transmitted information.

In general, when information of the control plane is transmitted, a control channel is used. When information of the user plane is transmitted, a traffic channel is used. Also, when information is intended for a specific user, a dedicated channel in used, and when information is intended for all users, a common channel is used. Thus, logical channels are classified into a Dedicated Control Channel (DCCH), a Dedicated Traffic Channel (DTCH), a Common Control Channel (CCCH), and a Common Traffic Channel (CTCH).

The MAC layer is divided into a MAC-b sublayer, a MAC-d sublayer, and a MAC-c/sh sublayer, according to the type of transport channel being managed. The MAC-b sublayer manages a broadcast channel (BCH) handling the broadcast of various data and system information, while the MAC-c/sh sublayer manages a common transport channel such as a forward access channel (FACH), a downlink shared channel (DSCH), or the like, being shared with other terminals.

In the UTRAN 100, the MAC-c/sh sublayer is located in a control RNC (CRNC) and manages channels shared by all terminals in a cell region, so that one MAC-c/sh sublayer exists for each cell. A MAC-c/sh sublayer also exists in each terminal 10, respectively.

The MAC-d sublayer manages a dedicated channel (DCH), which is a dedicated transport channel for a specific terminal 10. Accordingly, the MAC-d sublayer is located in a serving RNC (SRNC) that manages a corresponding terminal 10, and one MAC-d sublayer also exists in each terminal 10.

A radio link control (RLC) layer provides support for reliable data transmissions, and may perform segmentation and concatenation of an RLC service data unit (SDU) that arrives from a higher layer. The RLC SDU transferred from the higher layer is adjusted in size according to a throughput capacity at the RLC layer, to which header information is added, and is then transferred to the MAC layer in the form of a protocol data unit (PDU). The RLC layer includes an RLC buffer for storing the RLC PDU or the RLC SDU coming from the higher layer.

A broadcast / multicast control (BMC) layer performs the functions of scheduling a cell broadcast (CB) message transferred from the core network 200 and of broadcasting the CB message to UEs located in a specific cell or cells. At the UTRAN 100, the CB message transferred from the upper layer is combined with information, such as a message ID, a serial number, a coding scheme, etc., and transferred to the RLC layer in the form of a BMC message and to the MAC layer through a common traffic channel (CTCH), which is a logical channel. The logical channel CTCH is mapped to a transport channel (i.e., a forward access channel (FACH)), and to a physical channel (i.e., a secondary common control physical channel (S-CCPCH).

A packet data convergence protocol (PDCP) layer is located above the RLC layer. The PDCP layer is used to transmit network protocol data, such as the IPv4 or IPv6, effectively on a radio interface with a relatively small bandwidth. For this purpose, the PDCP layer performs the function of reducing unnecessary control information used in a wired network, and this function is called, header compression.

Various types of header compression techniques, such as RFC2507 and RFC3095 (robust header compression: ROHC), which are defined by an Internet standardization group called the IETF (Internet Engineering Task Force), can be used. In these methods, only the absolutely necessary information in the header part of a data is transmitted with actual traffic data, thus transmitting a smaller amount of control information can reduce the overall amount of data to be transmitted.

The radio resource control (RRC) layer located at the lowest portion of the third layer (L3) is only defined in the control plane, and controls the transport channels and the physical channels in relation to the setup, the reconfiguration, and the release (cancellation) of the radio bearers (RBs). Here, the RB signifies a service provided by the second layer (L2) for data transmission between the terminal 10 and the UTRAN 100. In general, the set up of the RB refers to the process of stipulating the characteristics of a protocol layer and a channel required for providing a specific data service, and setting the respective detailed parameters and operation methods.

The RLC layer may be part of the user plane or the control plane in accordance with an upper layer connected thereto. The RLC layer is part of the control plane when data is received from the RRC layer, and the RLC layer is part of the user plane in all other instances.

As can be understood from Figure 2, in case of the RLC layer and the PDCP layer, a plurality of entities may exist in a single layer thereof. This is because one terminal may have many radio (wireless) carriers, and typically, only one RLC entity and one PDCP entity is used for each radio carrier.

Next, multimedia broadcast / multicast service (MBMS) will be described. MBMS refers to a downlink transmission service for providing data services such as, streaming data services (e.g., multimedia, video on demand, webcast) or background data services (e.g., e-mail, short message services (SMS), downloading), to a plurality of terminals by employing a common or exclusive downlink channel. MBMS can be classified into a broadcast mode and a multicast mode.

In general, "multicast" refers to transmitting (propagating) data to a specified group of users connected to a local area network (LAN) or the Internet, whereby one user transmits data to a few users, who then each transmit the received data to a plurality of users using, for example, a bucket relay method. Unlike "unicast," which is the transmission of data to one specified user, or "broadcast," which is the transmission of data to an unspecified plurality of users, multicast is the transmission of data to a specified plurality of users.

The MBMS broadcast mode refers to transmitting multimedia data to all users within a broadcast area, whereby a broadcast area refers to a region where broadcast service is possible. The related art procedures for users to receive a certain broadcast service are as follows.
(1) Users receive a service announcement provided by the network. Here, a service announcement refers to providing to the terminal, an index and any related information of the services to be provided.
(2) The network establishes a bearer for the corresponding broadcast service.
(3) Users receive service notification provided by the network. Here, service notification refers to notifying the terminal of the information regarding the broadcast data to be transmitted.
(4) Users receive the broadcast data transmitted from the network.
(5) The network releases the bearer for the corresponding broadcast service.

The MBMS multicast mode refers to the service for transmitting multicast data to a particular user (terminal) group within a multicast area. Here, a multicast area refers to a region where multicast service is possible. The related art procedures for users to receive a certain multicast service are as follows.
(1) A user must first subscribe to a multicast subscription group. Here, subscribing refers to establishing a relationship between the service provider and the user (subscriber). A multicast subscription group refers to a group of users who have completed the subscription process.
(2) Users who subscribed to the multicast subscription group receive a network announcement provided by the network. Here, a service announcement refers to providing to the terminal, an index and any related information of the services to be provided.
(3) A user who subscribed to a multicast subscription group must join a multicast group in order to receive a particular multicast service. Here, a multicast group refers to a group of users receiving a particular multicast service. Joining refers to one user merging with the other users in a multicast group who congregated to receive a particular multicast service. Joining is also referred to as MBMS multicast activation. Thus, a user can receive particular multicast data through MBMS multicast joining or activation.
(4) The network establishes a bearer for the corresponding multicast service.
(5) A user who joined a multicast group receives service notification provided by the network. Here, service notification refers to notifying the terminal of the information regarding the broadcast data to be transmitted.
(6) Users receive the multicast data transmitted from the network.
(7) The network releases the bearer for the corresponding broadcast service.

MBMS user data is transmitted from the RNC 111 to the terminal 10 via a base station (i.e., a Node-B in UMTS) by employing services of the user plane of the UTRAN protocol.

An MBMS RB, which is a radio bearer (RB) for the MBMS, serves to transmit user data of one specific MBMS, transferred from the core network 200 to the UTRAN 100, to a specific terminal group. The MBMS RB is classified into a point-to-multipoint RB and a point-to-point RB.

In order to provide MBMS, the UTRAN 100 selects one of the two types of MBMS RBs. In order to select the MBMS RB, the UTRAN 100 recognizes the number of users (terminals 10) for the specific MBMS existing in one cell. The UTRAN 100 internally sets a threshold value, and if the number of users existing in a cell is smaller than the threshold value, the UTRAN 100 sets a point-to-point MBMS RB, whereas if the number of users existing in a cell is greater than the threshold value, the UTRAN 100 sets a point-to-multipoint MBMS RB.

Real time protocol (RTP) for streaming data services will now be described. RTP is a protocol employed to provide real-time traffic. Examples of real-time traffic may include audio (voice) communications between two people or processing of received video frames from the sending (transmitting) side.

An RTP packet can be divided into a data field and a header. Real-time data is included in the data field, while the header includes information regarding the type of traffic. Also, the transmitting end can control the service quality (QoS) of the streaming data service provided via the RTP by using a real-time quality control protocol (RTCP). The receiving end, using the RTCP, can feed back to the transmitting end, the QoS of the streaming data service received via the RTP.

When a data service (e.g., MBMS) is provided via a downlink channel, a terminal (or terminals in a terminal group) receiving the data service must transmit feedback information back to the radio (wireless) network via an uplink channel, in order to ensure proper communication between the terminal and network, and allow optimal data transfer to the user.

Feedback is required for several reasons. First, when providing streaming data services using RTP and RTCP, the terminals must transmit RTCP feedback information to allow proper data transmission and reception. Second, when header compression is used, the terminals must feed back full header information, i.e., context data corruption information, to allow proper data transmission and reception. Third, for downlink power control, the terminals must feed back reception power information of the downlink channel to allow proper data transmission and reception. Accordingly, to properly provide MBMS or other data services to the user, an uplink channel for transmitting feedback information from the terminal to the network is required, in addition to a downlink channel for transmitting data to the terminal.

### DISCLOSURE OF THE INVENTION

One aspect of the invention involves the recognition of the drawbacks of the related art. In particular, in a related art radio multimedia broadcast /multicast service (MBMS) system, a terminal group receiving MBMS can transmit feedback information via a logical channel, such as a dedicated traffic channel / dedicated control channel (DTCH/DCCH) or a common control channel / common traffic channel (CCCH/CTCH). However, the related art method employing such logical channels has the following disadvantages.

When using a DTCH/DCCH, there is a problem that each terminal receiving a particular MBMS service must respectively establish a logical channel DTCH/DCCH. Namely, as many DTCH/DCCHs as terminals receiving a particular MBMS should be established. In other words, the total number of DTCH/DCCHs to be established must equal the total number of terminals receiving a particular MBMS service. Thus, resources for the uplink channel may be undesirably consumed or wasted, especially when a large number of users are receiving the particular MBMS service. Also, upon receiving feedback information via the DTCH/DCCH, there is a disadvantage that the SNRC must then forward such feedback information to the CRNC. This is because it is the CRNC that handles MBMS data transmissions, while the transmissions/receptions via the DTCH/DCCH are handled by the SRNC.

When employing the related art CCCH/CTCH, because all terminals within the cell are allowed to use the related art CCCH/CTCH, there is a disadvantage that the related art CCCH/CTCH cannot be configured according to the specific characteristics of the feedback information of a particular terminal group. In other words, if the CCCH/CTCH is adjusted with feedback information from a particular MBMS service, it means that the CCCH/CTCH is not good for terminals receiving other types of MBMS services. The related art CCCH/CTCH also has difficulties in accommodating any specific characteristics of feedback information.

Furthermore, under the related art method, the related art CTCH cannot be employed as a channel for transmitting feedback information, because the related art CTCH cannot be configured as an uplink channel, or there would be many difficulties in configuring the related art CTCH as an uplink channel, if such would even be feasible.

Examples of mobile communication systems in which mobile terminals receiving a multicast service transmit feedback information for power control purposes to a base station via a common channel that is not specific for the multicast service can be found in EP 1 143 635 A1 and EP 0 999 656 A1. The first document specifically refers to a random access channel as a channel for transmitting the feedback information, and the latter document speaks of a common communication channel in this regard.

A further document of the prior art, WO 01/26397 A1, is also concerned with transmitting information on the received transmission quality from mobile terminals receiving a multicast to a network providing the multicast. The document is silent, however, on the channel used for transmitting the quality information.

The technical specification 3GPP TS 22.146, version 6.0.0 of June 2002 defines requirements which shall be supported for the provision of MBMS services.

Aspects of the packet data convergence protocol (PDCP) can be found in the technical specification ETSI TS 125 323, version 3.6.0 of September 2001.

The present invention provides methods for communicating in a wireless communication system according to each of claims 1 and 12. The present invention further provides an apparatus according to claim 21 as well as a terminal according to claim 22. Preferred embodiments are given in the dependent sub-claims.

One advantage of the wireless mobile communication system according to the present invention is in establishing an uplink common channel that is common to a terminal group receiving a particular data service (in particular, MBMS), and that allows transmission of feedback information for such data services (e.g., MBMS). Preferably, the uplink common channel accommodates a plurality of terminals within a terminal group by employing time division (i.e., time sharing) techniques.

For example, a first terminal can be set to transmit feedback information via the uplink common channel during a first time period, while a second terminal can be set to transmit feedback information via the uplink common channel during a second time period. The particular time division or time sharing techniques will depend upon the conditions and characteristics of the wireless communication environment, such as the type of data service being provided, the type of feedback information, the transmission conditions at each terminal, and the like.

To achieve these and other advantages and in accordance with the purpose of the invention, as embodied and broadly described herein, the present invention provides at least one uplink common channel being adaptively established in accordance with the characteristics of the feedback information from a particular terminal group, and the uplink common channel is commonly used by all corresponding user terminals for each particular type of MBMS (i.e., for each terminal group).

Additional advantages, objects, and features of the invention will be set forth in part in the description which follows and in part will become apparent to those having ordinary skill in the art upon examination of the following or may be learned from practice of the invention. The objects and advantages of the invention may be realized and attained as particularly pointed out in the appended claims.

It is to be understood that both the foregoing general description and the following detailed description of the present invention are exemplary and explanatory, and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principles of the invention.

In the drawings:
Figure 1 illustrates the components of a typical UMTS network applicable in the conventional art and in the present invention;
Figure 2 illustrates a radio access interface protocol structure between the terminal and the UTRAN that are based upon the 3GPP wireless access network standards;
Figure 3 illustrates the procedures for establishing an uplink common channel according to an embodiment of the present invention;
Figure 4 illustrates an example of the procedures in transmitting feedback information via an established uplink common channel using a control plane service of the UTRAN according to an embodiment of the present invention; and
Figure 5 illustrates an example of the procedures in transmitting feedback information via an established uplink common channel using a user plane service of the UTRAN according to an embodiment of the present invention.

### MODES FOR CARRYINGOUT THE PREFERRED EMBODIMENTS

Reference will now be made in detail to some embodiments of the present invention, examples of which are illustrated in the accompanying drawings. Wherever possible, the same reference numbers will be used throughout the drawings to refer to the same or like parts.

The present invention is implemented in a mobile communication system such as UMTS (Universal Mobile Telecommunication System) developed by the 3GPP. Without being restricted thereto, the present invention can be also applied to or modified to accommodate other radio (wireless) communication systems operating under similar or different standards.

The present invention proposes to overcome the problems that may occur when transmitting feedback information of a data service (e.g., a multimedia broadcast/multicast service (MBMS)) according to the related art techniques. For this purpose, the present invention proposes a radio (wireless) communication scheme that allows transmission of at least one broadcast and/or multicast service to a plurality of terminals via a downlink channel, wherein the terminals, that receive a particular broadcast or multicast service, transmit corresponding feedback information to the radio (wireless) communication network, via at least one particular uplink common channel that has been adaptively established to accommodate the characteristics of the feedback information and other characteristics of the communication environment.

Also, the wireless network controls the transmission of data for a particular broadcast and multicast service by using the feedback information received via the uplink common channel. According to the present invention, one particular uplink common channel may be used for one particular broadcast and/or multicast service. Additionally, one or more particular uplink common channel may also be employed for transmitting feedback information of one or more particular broadcast and/or multicast services.

Additionally, the particular uplink common channel can permit transmission of feedback information for one or more particular broadcast and/or multicast services. Preferably, the uplink common channel according to the present invention is an uplink common logical channel that provides the function of forwarding units of data between an RLC entity defined for a particular broadcast and multicast service and a MAC layer that manages a common transport channel.

According to the present invention, the terminals apply respectively different codes and parameters for respectively different uplink common channels to transmit the corresponding feedback information. Also, the UTRAN receives the feedback information via the uplink common channel by using respectively different codes and parameters for the respectively different uplink common channels.

According to the present invention, feedback information may include the information regarding the loss of data received from a downlink channel during a certain time period, the strength of the signal received via a downlink channel during a certain time period, the signal loss information, and/or other characteristics of particulars about the communication environment within the radio (wireless) communication network. The wireless communication network can classify the feedback information received via the uplink common channels in accordance with each broadcast and multicast service, and can manage each broadcast and multicast service.

According to an embodiment of the present invention, the method performed by the wireless communication network to control data transmission of a particular broadcast and multicast service based upon the feedback information, comprises a procedure of the wireless network for performing particular mathematical calculations to convert the feedback information that was received for a particular broadcast and multicast service into certain result values; a procedure of the wireless network for comparing the certain result values with predetermined particular threshold values; and a procedure of the wireless network for controlling the transmission of particular broadcast and multicast service data using the results of the comparison.

Here, examples of controlling the transmission of particular broadcast and multicast data may include, increasing or decreasing the transmission rate of the particular broadcast and multicast service data, or increasing or decreasing the power of the downlink channel that allows transmission of particular broadcast and multicast service data. Also, the particular mathematical equations can be predetermined at the wireless network, and a mathematical equation that obtains the average of the feedback information transmitted over time is one example.

Next, three examples regarding the different types of information that a terminal may feed back to the wireless communication network (e.g., a UMTS network), as well as the transmission procedures for feedback information and the transmission control procedures for each example will be described.

### Example 1

The uplink common channel can feed back RTCP packets that provide service quality information of real-time traffic received through the RTP. This feedback procedure comprises, a procedure by the terminal of measuring for a certain amount of time, the service quality of an RTP packet of an MBMS service that has been broadcast or multicast through the downlink channel; a procedure of forming an RTCP packet based upon the measured result; and a procedure of transmitting, to the MBMS data sending side of the UMTS, the formed RTCP packets via the uplink common channel according to the present invention.

The data transmitting side of the UMTS network controls the flow of RTP packets of the corresponding MBMS service using the received RTCP packet, and can perform the control of the transmission rate or the like. For example, the UMTS network adjusts the transmission rate to be relatively low if the average of service quality reported at a prescribed time is lower than a particular threshold value. Also, the UMTS network adjusts the transmission rate to be relatively high if the average of service quality reported at a prescribed time is higher than a particular threshold value.

Preferably, the uplink common channel used for transmitting the RTCP packets is a common logical channel; in particular, a common traffic channel can be used. Here, the RTCP packet transmission uses the layer service of the user plane in the UTRAN protocol layer structure.

### Example 2

When a header compression method is used for MBMS transmission, the uplink common channel can be used in providing feedback of context loss information. This feedback procedure includes, a procedure performed at the PDCP layer of the terminal, of measuring the degree of loss for MBMS data packets that were header-compressed and was broadcast or multicast via a downlink channel; a procedure of forming context loss information if the degree of loss is above a certain level; and a procedure of feeding back the formed context loss information to the PDCP layer of the UMTS network via an uplink common channel according to the present invention.

The PDCP layer of the UMTS network uses the received context loss information to control the transmission of a full header type packet for the corresponding MBMS. If the total number of context loss information received for a prescribed time period is less than a particular threshold value, the PDCP layer of the UMTS network does not transmit a full header type packet. In contrast, if the total number of context loss information received for a prescribed time period is greater than a particular threshold value, the PDCP layer of the UMTS network transmits a full header type packet.

Preferably, the uplink common channel used for feeding back context loss information is a common logical channel, but a common traffic channel or a common control channel may be used. When a common traffic channel is used, transmission of the context loss information employs a layer service of the user plane at the UTRAN protocol layer structure. In contrast, when a common control channel is used, transmission of the context loss information employs a layer service of the control plane at the UTRAN protocol layer structure.

### Example 3

The uplink common channel may be used to control the transmission rate of the MBMS data or to control the transmission power of the downlink channel that transmits MBMS data. This feedback procedure includes, the terminal performing the procedure of measuring the loss of MBMS data or measuring the received signal of the downlink channel that transmits MBMS data; a procedure of forming a measurement report message, a transmission rate control message, or a transmission power control message based upon the measured results; and a procedure of feeding back the formed message to the UMTS network via an uplink common channel according to the present invention.

The measurement report message can include the reception signal strength of the downlink channel, or a signal-to-interference ratio, or a path loss of the downlink channel.

The transmission rate control message can include a downlink channel code indicator, or a command that increases or decreases a spreading factor (SF) of the channel, or a downlink channel modulation method indicator, or a MBMS data transmission rate indicator.

The transmission power control message can include a command to increase or decrease the power of the downlink channel, or information indicating a transmission power value of the downlink.

By using the received message, the UTRAN can control the transmission rate of the MBMS data or control the transmission power of the downlink channel that transmits MBMS data.

The UMTS network may increase the power of the downlink channel if the average of the reception signal strengths that have been received by the terminals during a certain time period is lower than a particular threshold value. In contrast, the UMTS network may decrease the power of the downlink channel if the average of the reception signal strengths that have been received by the terminals during a certain time period is greater than a particular threshold value.

Preferably, the uplink common channel used for feeding back the above-identified messages is a common logical channel; in particular, a common control channel is used. Here, the RRC of the terminal forms the uplink common channel messages, while the UTRAN. RRC receives the formed messages. Preferably, the UTRAN RRC is located in the CRNC of the UTRAN. The layer service of the control plane at the UTRAN protocol layer structure is used to transmit the messages.

In another embodiment, an uplink physical channel may be used as the uplink common channel for feeding back the messages. Here, the physical layer of the terminal forms the messages, and the physical layer of the UTRAN receives the formed messages.

### Establishing an uplink common channel

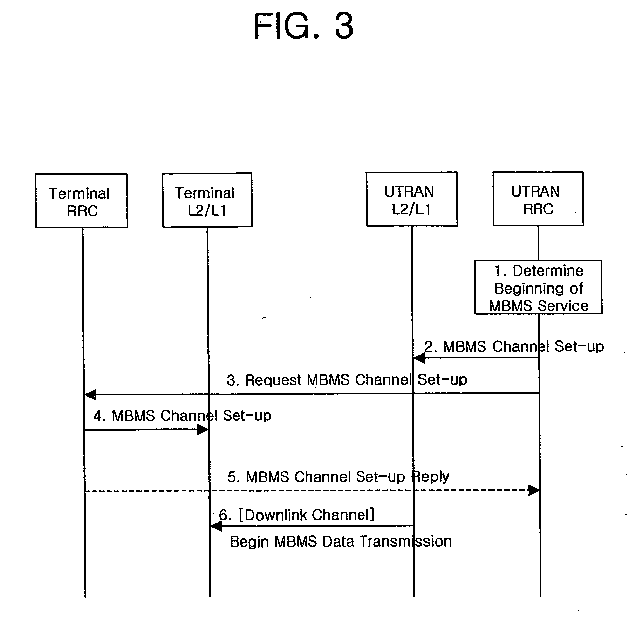

Figure 3 illustrates the procedures for establishing an uplink common channel according to the present invention. The UTRAN 100 requests the terminal 10 to establish a particular uplink common channel for a particular MBMS service in one cell through the following procedures.

The UTRAN 100 configures the feedback information, for respectively different MBMS services within a cell, to be transmitted through respectively different uplink common channels. Also, the UTRAN 100 configures the feedback information for the same MBMS service within a cell to be transmitted through the same uplink common channel.

Additionally, in these procedures, the UTRAN 100 can configure each uplink common channel to use different ciphering parameters. Preferably, the UTRAN RRC is located in the CRNC.

The steps of establishing an uplink common channel according to one embodiment of the present invention are as follows:
(1) The UTRAN decides to commence a particular MBMS service in a particular cell.
(2) The UTRAN RRC requests layer 2 and layer 1 of the UTRAN (UTRAN L2/L1) located in the user plane to establish an uplink common channel for a particular MBMS service.
(3) The UTRAN RRC requests the RRC in each terminal that desires to receive the particular MBMS service to establish an uplink common channel for the particular MBMS service.
(4) The RRC in each terminal requests Layers 2 and 1 of each terminal (terminal L2/L1) located in the user plane to establish an uplink common channel for the particular MBMS service.
(5) The RRC of each terminal may inform the UTRAN RRC that an uplink common channel for the particular MBMS service has been established. However, it should be noted that this step is not absolutely necessary for the present invention.
(6) The UTRAN L2/L1 located in the user plane commences (initiates) transmission of MBMS data to the terminal via a downlink channel.

The above procedure for establishing an uplink common channel for a particular MBMS service may also be used in establishing a downlink channel for transmitting the MBMS data. Namely, in steps (2) and (5), the MBMS channel establishment message and the MBMS channel request/answer messages may contain both, the information for establishing an uplink common channel and the information for establishing a downlink channel.

### Transmitting feedback information via the uplink common channel using the UTRAN control plane service

After the uplink common channel is established by the above procedure, transmission of the particular MBMS data may commence by using the user plane service, and feedback information for the received MBMS data may be transmitted via the established uplink common channel.

As described above, the uplink common channel used for the transmission of feedback information according to the present invention may employ control plane service or user plane service.

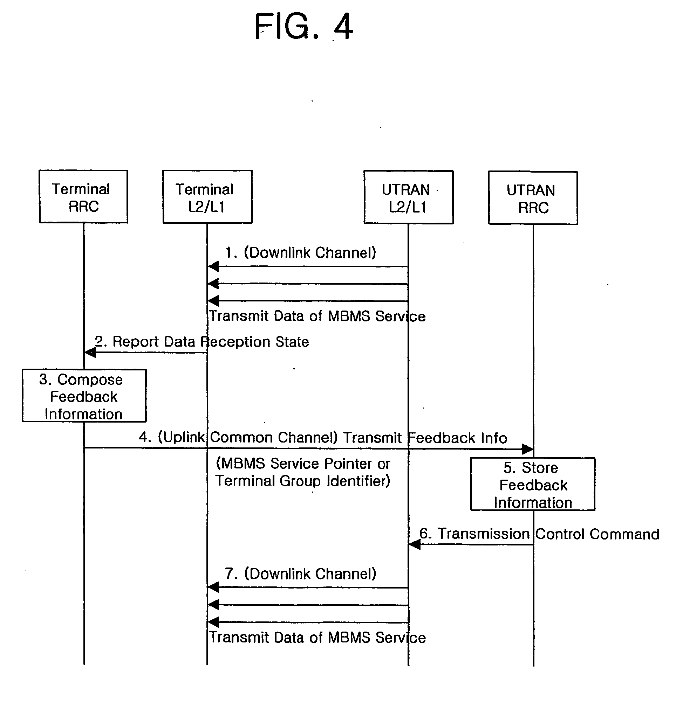

Figure 4 depicts an example of the procedures in transmitting feedback information via an uplink common channel using a control plane service of the UTRAN after the uplink common channel is established. More preferably, the UTRAN RRC and the UTRAN L2 are located in the CRNC, and the UTRAN L1 is located in Node-B.
(1) The user plane UTRAN L2/L1 broadcasts or multicasts the data of a particular MBMS service via a downlink channel.
(2) Each terminal L2/L1 layer that receives the MBMS service, reports the MBMS data reception status to each terminal RRC. Namely, each terminal L2/L1 layer reports the measurement results of the received particular MBMS data to each terminal RRC.
(3) Each terminal RRC creates feedback information by using the measurement results.
(4) Each terminal RRC transmits the feedback information to the UTRAN RRC via the established uplink common channel. Here, the MAC or RRC of the terminal may add to the feedback information, a particular MBMS service identifier or a terminal group identifier that identifies a terminal group that receives the particular MBMS service. Also, the MAC or RRC of the terminal may add to the feedback information, a terminal identifier that allows identification of each terminal.
(5) The UTRAN RRC stores the feedback information. The UTRAN RRC can determine to which MBMS service the feedback information is related to by means of the added service identifier or the terminal group identifier. The UTRAN RRC manages and stores the received feedback information per MBMS service.
(6) The UTRAN RRC compares the value derived from the feedback information for a particular MBMS service, with a predetermined particular threshold value. According to the comparison result, the UTRAN makes control commands for the data transmission of the particular MBMS service, and control commands are forwarded to the user plane of UTRAN L2/L1.
(7) The user plane UTRAN L2/L1 controls the data transmission of the particular MBMS according to the control commands, and broadcasts or multicasts the data to the terminals.

### Transmitting feedback information via the uplink common channel using the UTRAN user plane service

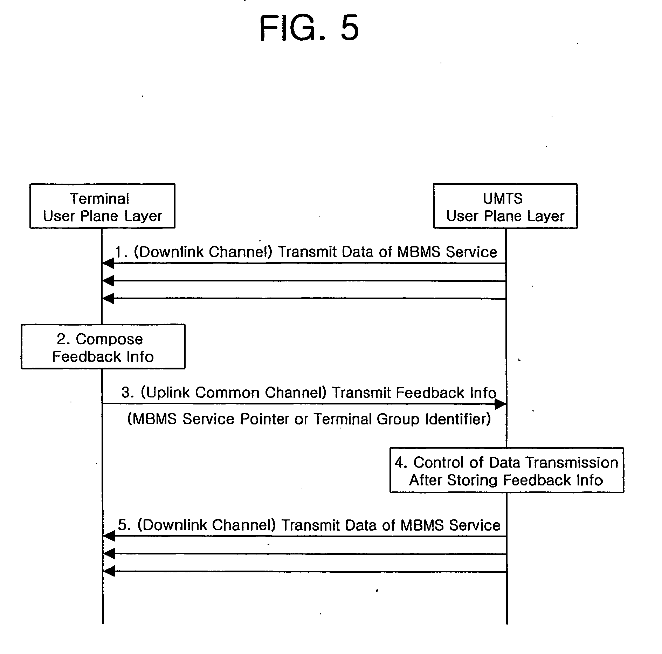

Figure 5 depicts an example of the procedures in transmitting feedback information via an uplink common channel using a user plane service of the UTRAN after the uplink common channel is established.

Here, the terminal user plane layer refers to one or more user plane layer entities that can receive particular MBMS data, measure the received data, and make feedback information.

Also, the UMTS user plane layer refers to one or more user plane layer entities that can transmit particular MBMS data, receive feedback information from the terminal user plane layer, and perform data transmission control.

For example, the terminal user plane layer may be an RTP/RTCP entity, while the UMTS user plane layer can be an RTP/RTCP entity. Also, the terminal user plane layer may be one or more entities of a PDCP, RLC, MAC or physical layer. The UMTS user plane layer can be one or more entities of a PDCP, RLC, MAC or physical layer.
(1) The UMTS user plane layer broadcasts or multicasts a particular MBMS data via a downlink channel.
(2) Each terminal's user plane layer receiving the MBMS service, measures the received particular MBMS data, and creates feedback information using the measured results.
(3) Each terminal user plane layer transmits the feedback information to the UTRAN user plane layer via the established uplink common channel. Here, one layer located in the terminal user plane may add to the feedback information, a service identifier that indicates the particular MBMS service or a terminal group identifier that indicates a particular terminal group receiving the particular MBMS service. Also, one layer located in the terminal user plane may add to the feedback information, a terminal identifier that identifies each terminal. In the preferred embodiment, the one layer located in the user plane of the terminal is a MAC sub-layer.
(4) The UTRAN user plane layer stores the received feedback information. The UTRAN user plane layer can determine to which MBMS service the received feedback information is related to by means of the added service identifier or the terminal group identifier. The UTRAN user plane layer classifies, manages and stores the received feedback information per a MBMS service. Thereafter, the UTRAN user plane layer compares the value derived from the feedback information for a particular MBMS service, with a predetermined particular threshold value. According to the comparison result, the UTRAN user plane layer is configured such that the data transmission for a particular MBMS service is appropriately controlled.
(5) The UTRAN user plane layer controls data transmission of a particular MBMS service based upon the control configuration of step (4) and broadcasts or multicasts MBMS data to the terminals.

In the present invention, the bearer for the particular broadcast and multicast service can be configured to have a downlink common channel that transmits broadcast and multicast data, and an uplink common channel for transmitting feedback information of the broadcast and multicast data.

In another embodiment, the bearer for a particular broadcast and multicast service may be configured to have only a downlink common channel for data broadcast and multicast, while the uplink common channel for transmitting feedback information of the data may be configured by another different uplink bearer. Namely, according to the present invention, the uplink common channel for transmitting MBMS feedback information and the downlink channel for transmitting MBMS data can be configured as a single bi-directional RB.

In a further embodiment, the uplink common channel and the downlink channel can be configured by respectively different uni-directional RBs. Furthermore, the uplink common channel and the downlink channel can be configured by a single RAB.

In yet another embodiment, the uplink common channel and the downlink channel can be configured by respectively different uni-directional RABs. Also, a single UMTS bearer can be configured by using both the uplink common channel and the downlink channel. In yet a further embodiment, respectively different UMTS bearers can be configured by using the uplink common channel and the downlink channel, respectively.

When using a prior art DTCH/DCCH, there is a problem that the terminals receiving a particular MBMS service can transmit feedback information for the service only by using the DTCH/DCCH or CCCH/CTCH. When DTCH/DCCHs are used, as many prior art DTCHs as terminals receiving a particular MBMS service are established. Thus, resources for the uplink channel may be undesirably consumed or wasted, especially when a large number of users are receiving the particular MBMS. And, when the CCCH/CTCH is used, the CCCH/CTCH cannot be configured with parameters best suited for a particular MBMS service.

The present invention proposes a wireless (radio) communication scheme that uses a particular uplink common channel for each particular MBMS service, i.e., for each particular terminal group. The terminals in a particular terminal group use a particular uplink common channel for transmitting feedback information, and thus uplink channel resources are not wasted, and the uplink common channel can be specifically configured according to the characteristics of the feedback information of a particular terminal group.

Furthermore, it can be understood that the present invention has been described in the context of providing MBMS to users for exemplary purposes only. The teachings and/or suggestions of the present invention may also be applicable to other types of signal transmissions or data transfers employing an uplink channel for transmitting feedback information, in addition to a downlink channel for transmitting data for a data service.

It will be apparent to those skilled in the art that various modifications and variations can be made in the present invention. Thus, it is intended that the present invention covers the modifications and variations of this invention provided they come within the scope of the appended claims.

## Claims

1. A method of communicating in a wireless communication system having at least one cell, the method comprising:
transmitting data from a network to a plurality of terminals in the at least one cell, the data associated with at least one MBMS service;
**characterized by**:
transmitting, from said network to said plurality of terminals, requests to establish a different uplink common channel for each particular MBMS service;
receiving, via an uplink common channel that has been established for a particular MBMS service, feedback information from at least one of the plurality of terminals, the feedback information being associated with a quality of the data received by the at least one terminal and being associated with the particular MBMS service.

2. The method of claim 1, wherein the uplink common channels are common logical channels, common transport channels or common physical channels.

3. The method of claim 1, wherein the quality of the data is associated with at least one of transmission rate, transmission power, data loss, signal loss, signal strength, signal to interference ratio, and path loss.

4. The method of claim 1, wherein the feedback information comprises information associated with at least one of transmission rate control, transmission power control, channel code, spreading factor, and channel modulation and further comprising altering at least one of transmission rate, transmission power, channel code, spreading factor, and channel modulation of the data transmitted to the plurality of terminals in response to the feedback information.

5. The method of claim 1, wherein the feedback information comprises information associated with degree of loss for header-compressed data and further comprising transmitting data to the plurality of terminals with one of a full header and not a full header in response to the feedback information.

6. The method of claim 1, further comprising:
using respectively different codes and parameters for receiving data through different uplink common channels.

7. The method of claim 1, wherein the network requests different uplink common channels to be configured differently according to respective characteristics of the feedback information to be transmitted on said uplink common channels.

8. The method of claim 1, wherein the feedback information is included in a message selected from the group consisting of:
a measurement report message that comprises at least one of a reception signal strength of a downlink channel, a signal-to-noise interference ratio, and a path loss of the downlink channel; a transmission rate control message that comprises at least one of a downlink channel code indicator, a command that increases or decreases a spreading factor, a downlink channel modulation method indicator, and a MBMS data transmission rate indicator; anda transmission power control message that comprises at least one of a command to increase or decrease the power of the downlink channel, and information indicating a transmission power value of the downlink.

9. The method of claim 1, further comprising:
performing particular mathematical calculations to convert the feedback information into certain result values;
comparing the certain result values with particular threshold values; and
controlling the transmission of the specific MBMS service according to the comparing step.

10. The method of claim 1, further comprising:
configuring the uplink common channel for receiving feedback information and a downlink common channel for transmitting the data as a single bi-directional radio bearer or as respectively different uni-directional radio bearers.

11. The method of claim 1, further comprising:
requesting that each respective terminal uses time division or time sharing techniques and receiving the feedback information of each respective terminal during a respectively different time period.

12. A method performed by a terminal for communicating in a wireless communication system having at least one cell, the method comprising:
receiving data from a network associated with the at least one cell, the data being associated with of least one MBMS service and the data being received using a downlink channel;
**characterized by**:
receiving from said network, requests to establish a different uplink common channel for each particular MBMS service;
establishing a different uplink common channel for each particular MBMS service with said network; and
transmitting, via an uplink common channel that has been established for a particular MBMS service, feedback information associated with a quality of the data received and associated with the particular MBMS service.

13. The method of claim 12, wherein the uplink common channels are common logical channels, common transport channels or common physical channels.

14. The method of claim 12, wherein the quality of the data is associated with at least one of transmission rate, transmission power, data loss, signal loss, signal strength, signal to interference ratio, and path loss.

15. The method of claim 12, wherein the feedback information comprises at least one information selected from the group consisting of:
information associated with at least one of transmission rate control, transmission power control, channel code, spreading factor, and channel modulation; and information associated with a degree of loss for header-compressed data.

16. The method of claim 12, further comprising:
using respectively different codes and parameters for transmitting data through different uplink common channels.

17. The method of claim 12, wherein, upon request from the network, different uplink common channels are configured differently according to respective characteristics of the feedback information to be transmitted on said uplink common channels.

18. The method of claim 12, wherein the feedback information is included in a message selected from the group consisting of:
a measurement report message that comprises at least one of a reception signal strength of a downlink channel, a signal-to-noise interference ratio, and a path loss of the downlink channel;a transmission rate control message that comprises at least one of a downlink channel code indicator, a command that increases or decreases a spreading factor, a downlink channel modulation method indicator, and a MBMS data transmission rate indicator; and transmission power control message that comprises at least one of a command to increase or decrease the power of the downlink channel, and information indicating a transmission power value of the downlink.

19. The method of claim 12, further comprising:
configuring the uplink common channel for transmitting feedback information and a downlink common channel for receiving the data as a single bi-directional radio bearer or as respectively different uni-directional radio bearers.

20. The method of claim 12, further comprising:
upon request from the network, employing time division or time sharing techniques and transmitting the feedback information of the terminal during a particular time period.

21. An apparatus for communicating in a wireless communication system having at least one cell, the apparatus comprising:
a transmitting module adapted to transmit data to a plurality of terminals in the at least one cell, the data being associated with at least one MBMS service;
**characterized by**:
a transmitting module adapted to transmit to said plurality of terminals, requests to establish a different uplink common channel for each particular MBMS service;
a receiving module adapted to receive, via an uplink common channel that has been established for a particular MBMS service, feedback information from at least one of the plurality of terminals, the feedback information being associated with a quality of the data received by the at least one terminal and being associated with the particular MBMS service.

22. A terminal for communicating in a wireless communication system having at least one cell and comprising:
a receiving module adapted to receive data from a network associated with the at least one cell, the data being associated with at least one MBMS service and the data being received using a downlink channel;
**characterized by**:
a receiving module adapted to receive from said network, requests to establish a different uplink common channel for each particular MBMS service;
a module for establishing a different uplink common channel for each particular MBMS service with said network; and
a transmitting module adapted to transmit, via an uplink common channel that has been established for a particular MBMS service, feedback information associated with a quality of the data received by the receiving module and associated with the particular MBMS service.

23. The terminal of claim 22, further adapted to carry out the steps of a method according to any one of claims 12-20.

## Patentansprüche

1. Verfahren zur Kommunikation in einem drahtlosen Kommunikationssystem mit mindestens einer Zelle, wobei das Verfahren umfasst:
Übermitteln von Daten von einem Netzwerk zu einer Mehrzahl Endgeräte in der mindestens einen Zelle, wobei die Daten mindestens einem MBMS-Dienst zugeordnet sind,
**gekennzeichnet durch**:
Übermitteln von Anforderungen von dem Netzwerk an die Mehrzahl Endgeräte, für jeden bestimmten MBMS-Dienst einen unterschiedlichen gemeinsamen Aufwärtskanal einzurichten,
Empfangen von Rückmeldungsinformationen von mindestens einem der mehreren Endgeräte über einen gemeinsamen Aufwärtskanal, der für einen bestimmten MBMS-Dienst eingerichtet wurde, wobei die Rückmeldungsinformationen mit der Qualität der **durch** das mindestens eine Endgerät empfangenen Daten zusammenhängen und dem bestimmten MBMS-Dienst zugeordnet sind.

2. Verfahren nach Anspruch 1, wobei die gemeinsamen Aufwärtskanäle gemeinsame logische Kanäle, gemeinsame Transportkanäle oder gemeinsame physikalische Kanäle sind.

3. Verfahren nach Anspruch 1, wobei die Qualität der Daten mit zumindest einem der Folgenden zusammenhängt: Übertragungsrate, Sendeleistung, Datenverlust, Signalverlust, Signalstärke, Störabstand und Pfadverlust.

4. Verfahren nach Anspruch 1, wobei die Rückmeldungsinformationen Informationen umfassen, die mit zumindest einem der Folgenden zusammenhängen:
Übertragungsratensteuerung, Sendeleistungssteuerung, Kanalcode, Spreizfaktor und Kanalmodulation, und ferner umfassend das Ändern mindestens eines der Parameter Übertragungsrate, Sendeleistung, Kanalcode, Spreizfaktor und Kanalmodulation der an die Mehrzahl Endgeräte übermittelten Daten in Antwort auf die Rückmeldungsinformationen.

5. Verfahren nach Anspruch 1, wobei die Rückmeldungsinformationen Informationen umfassen, welche mit dem Verlustmaß für Header-komprimierte Daten zusammenhängen, und ferner umfassend das Übermitteln von Daten an die Mehrzahl Endgeräte mit vollständigem Header oder keinem vollständigen Header in Antwort auf die Rückmeldungsinformationen.

6. Verfahren nach Anspruch 1, ferner umfassend die Nutzung jeweils unterschiedlicher Codes und Parameter für den Empfang von Daten über unterschiedliche gemeinsame Aufwärtskanäle.

7. Verfahren nach Anspruch 1, wobei das Netzwerk eine unterschiedliche Konfigurierung verschiedener gemeinsamer Aufwärtskanäle nach Maßgabe jeweiliger Eigenschaften der auf den gemeinsamen Aufwärtskanälen zu übermittelnden Rückmeldungsinformationen anfordert.

8. Verfahren nach Anspruch 1, wobei die Rückmeldungsinformationen in einer Nachricht enthalten sind, welche aus der Gruppe ausgewählt ist, die besteht aus:
einer Messberichtnachricht, welche eine Empfangssignalstärke eines Abwärtskanals oder/und einen Rauschstörabstand oder/und einen Pfadverlust des Abwärtskanals beinhaltet, einer Übertragungsratensteuernachricht, welche einen Abwärtskanal-Codeindikator oder/und einen Befehl, der einen Spreizfaktor erhöht oder absenkt, oder/und einen Abwärtskanal-Modulationsverfahrensindikator oder/und einen MBMS-Datenübertragungsratenindikator beinhaltet, und einer Sendeleistungssteuernachricht, welche einen Befehl zur Erhöhung oder Absenkung der Leistung des Abwärtskanals oder/und Informationen beinhaltet, die einen Sendeleistungswert der Abwärtsstrecke angeben.

9. Verfahren nach Anspruch 1, ferner umfassend:
Durchführen bestimmter mathematischer Berechnungen zur Umwandlung der Rückmeldungsinformationen in bestimmte Ergebniswerte,
Vergleichen der bestimmten Ergebniswerte mit bestimmten Schwellenwerten und Steuern der Übermittlung des bestimmten MBMS-Diensts nach Maßgabe des Vergleichsschritts.

10. Verfahren nach Anspruch 1, ferner umfassend das Konfigurieren des gemeinsamen Aufwärtskanals für den Empfang von Rückmeldungsinformationen und eines gemeinsamen Abwärtskanals für die Übermittlung der Daten als einzelner bidirektionaler Funkträger oder als jeweils unterschiedliche unidirektionale Funkträger.

11. Verfahren nach Anspruch 1, ferner umfassend das Anfordern, dass jedes Endgerät Techniken der Zeitteilung oder des Time-Sharing anwendet, und Empfangen der Rückmeldungsinformationen jedes Endgeräts während einer jeweils unterschiedlichen Zeitperiode.

12. Verfahren zur Kommunikation in einem drahtlosen Kommunikationssystem mit mindestens einer Zelle, wobei das Verfahren von einem Endgerät durchgeführt wird und umfasst:
Empfangen von Daten von einem der mindestens einen Zelle zugeordneten Netzwerk, wobei die Daten mindestens einem MBMS-Dienst zugeordnet sind und die Daten auf einem Abwärtskanal empfangen werden,
**gekennzeichnet durch**:
Empfangen von Anforderungen von dem Netzwerk, für jeden bestimmten MBMS-Dienst einen unterschiedlichen gemeinsamen Aufwärtskanal einzurichten,
Einrichten eines unterschiedlichen gemeinsamen Aufwärtskanals für jeden bestimmten MBMS-Dienst mit dem Netzwerk und
Übermitteln von Rückmeldungsinformationen, welche mit der Qualität der empfangenen Daten zusammenhängen und einem bestimmten MBMS-Dienst zugeordnet sind, über einen gemeinsamen Aufwärtskanal, der für den bestimmten MBMS-Dienst eingerichtet wurde.

13. Verfahren nach Anspruch 12, wobei die gemeinsamen Aufwärtskanäle gemeinsame logische Kanäle, gemeinsame Transportkanäle oder gemeinsame physikalische Kanäle sind.

14. Verfahren nach Anspruch 12, wobei die Qualität der Daten mit mindestens einem der Folgenden zusammenhängt: Übertragungsrate, Sendeleistung, Datenverlust, Signalverlust, Signalstärke, Störabstand und Pfadverlust.

15. Verfahren nach Anspruch 12, wobei die Rückmeldungsinformationen mindestens eine Information umfassen, welche aus der Gruppe ausgewählt ist, die besteht aus: Informationen, welche mit mindestens einem der Folgenden zusammenhängen: Übertragungsratensteuerung, Sendeleistungssteuerung, Kanalcode, Spreizfaktor und Kanalmodulation, und Informationen, welche mit einem Verlustmaß von Header-komprimierten Daten zusammenhängen.

16. Verfahren nach Anspruch 12, ferner umfassend die Nutzung unterschiedlicher Codes und Parameter für die Übermittlung von Daten über jeweils unterschiedliche gemeinsame Aufwärtskanäle.

17. Verfahren nach Anspruch 12, wobei auf eine Anforderung seitens des Netzwerks hin unterschiedliche gemeinsame Aufwärtskanäle unterschiedlich konfiguriert werden nach Maßgabe jeweiliger Eigenschaften der auf den gemeinsamen Aufwärtskanälen zu übermittelnden Rückmeldungsinformationen.

18. Verfahren nach Anspruch 12, wobei die Rückmeldungsinformationen in einer Nachricht enthalten sind, welche aus der Gruppe ausgewählt ist, die besteht aus:
einer Messberichtnachricht, welche eine Empfangssignalstärke eines Abwärtskanals oder/und einen Rauschstörabstand oder/und einen Pfadverlust des Abwärtskanals beinhaltet, einer Übertragungsratensteuernachricht, welche einen Abwärtskanal-Codeindikator oder/und einen Befehl, der einen Spreizfaktor erhöht oder absenkt, oder/und einen Abwärtskanal-Modulationsverfahrensindikator oder/und einen MBMS-Datenübertragungsratenindikator beinhaltet, und einer Sendeleistungssteuernachricht, welche einen Befehl zur Erhöhung oder Absenkung der Leistung des Abwärtskanals oder/und Informationen beinhaltet, die einen Sendeleistungswert der Abwärtsstrecke angeben.

19. Verfahren nach Anspruch 12, ferner umfassend das Konfigurieren des gemeinsamen Aufwärtskanals für die Übermittelung von Rückmeldungsinformationen und eines gemeinsamen Abwärtskanals für den Empfang der Daten als einzelner bidirektionaler Funkträger oder als jeweils unterschiedliche unidirektionale Funkträger.

20. Verfahren nach Anspruch 12, ferner umfassend den Einsatz von Techniken der Zeitteilung oder des Time-Sharing und die Übermittlung der Rückmeldungsinformationen des Endgeräts während einer bestimmten Zeitperiode auf eine Anforderung des Netzwerks hin.

21. Vorrichtung zur Kommunikation in einem drahtlosen Kommunikationssystem mit mindestens einer Zelle, wobei die Vorrichtung umfasst:
ein Sendemodul, welches dazu ausgelegt ist, Daten an eine Mehrzahl Endgeräte in der mindestens einen Zelle zu senden, wobei die Daten mindestens einem MBMS-Dienst zugeordnet sind,
**gekennzeichnet durch**:
ein Sendemodul, welches dazu ausgelegt ist, an die Mehrzahl Endgeräte Anforderungen zu senden, für jeden bestimmten MBMS-Dienst einen unterschiedlichen gemeinsamen Aufwärtskanal einzurichten,
ein Empfangsmodul, welches dazu ausgelegt ist, über einen gemeinsamen Aufwärtskanal, der für einen bestimmten MBMS-Dienst eingerichtet wurde, Rückmeldungsinformationen von mindestens einem der Mehrzahl Endgeräte zu empfangen, wobei die Rückmeldungsinformationen mit der Qualität der **durch** das mindestens eine Endgerät empfangenen Daten zusammenhängen und dem bestimmten MBMS-Dienst zugeordnet sind.

22. Endgerät zur Kommunikation in einem drahtlosen Kommunikationssystem mit mindestens einer Zelle, umfassend:
ein Empfangsmodul, welches dazu ausgelegt ist, Daten von einem der mindestens einen Zelle zugeordneten Netzwerk zu empfangen, wobei die Daten mindestens einem MBMS-Dienst zugeordnet sind und die Daten auf einem Abwärtskanal empfangen werden,
**gekennzeichnet durch**:
ein Empfangsmodul, welches dazu ausgelegt ist, von dem Netzwerk Anforderungen zu empfangen, für jeden bestimmten MBMS-Dienst einen unterschiedlichen gemeinsamen Aufwärtskanal einzurichten,
ein Modul zum Einrichten eines unterschiedlichen gemeinsamen Aufwärtskanals für jeden bestimmten MBMS-Dienst mit dem Netzwerk und
ein Sendemodul, welches dazu ausgelegt ist, über einen gemeinsamen Aufwärtskanal, der für einen bestimmten MBMS-Dienst eingerichtet wurde, Rückmeldungsinformationen zu senden, die mit der Qualität der **durch** das Empfangsmodul empfangenen Daten zusammenhängen und dem bestimmten MBMS-Dienst zugeordnet sind.

23. Endgerät nach Anspruch 22, ferner dazu ausgelegt, die Schritte eines Verfahrens nach einem der Ansprüche 12-20 durchzuführen.

## Revendications

1. Procédé de communication dans un système de communication sans fil comportant au moins une cellule, le procédé comprenant :
la transmission de données depuis un réseau vers une pluralité de terminaux dans la au moins une cellule, les données associées à au moins un service MBMS ;
**caractérisé par**
la transmission, depuis ledit réseau vers ladite pluralité de terminaux, de demandes pour établir un canal commun de liaison montante pour chaque service MBMS particulier ;
la réception, via un canal commun de liaison montante qui a été établi pour un service MBMS particulier, d'informations rétroactives depuis au moins l'un de la pluralité de terminaux, les informations rétroactives étant associées à une qualité des données reçues par le au moins un terminal et étant associées au service MBMS particulier.

2. Procédé selon la revendication 1, dans lequel les canaux communs de liaison montante sont des canaux communs logiques, des canaux communs de transport ou des canaux communs physiques.

3. Procédé selon la revendication 1, dans lequel la qualité des données est associée à au moins l'un parmi la vitesse de transmission, la puissance de transmission, la perte de données, l'évanouissement du signal, la force du signal, le rapport signal/parasites et la perte de propagation.

4. Procédé sur la revendication 1, dans lequel les informations rétroactives comprennent des informations associées à au moins l'un parmi un contrôle de vitesse de transmission, un contrôle de puissance de transmission, un code de canal, un facteur d'étalement et la modulation de canal, et comprenant en outre le changement d'au moins l'un parmi la vitesse de transmission, la puissance de transmission, le code de canal, le facteur d'étalement et la modulation de canal des données transmises vers la pluralité de terminaux en réponse aux informations rétroactives.

5. Procédé selon la revendication 1, dans lequel les informations rétroactives comprennent des informations associées au degré de perte pour des données à en-tête compressé et comprenant en outre la transmission des données vers la pluralité de terminaux avec l'un parmi un en-tête complet et un en-tête non complet en réponse aux informations rétroactives.

6. Procédé selon la revendication 1, comprenant en outre :
l'utilisation de codes et paramètres respectivement différents destinés à recevoir des données par l'intermédiaire de différents canaux communs de liaison montante.

7. Procédé selon la revendication 1, dans lequel le réseau demande que différents canaux communs de liaison montante soient configurés différemment conformément aux caractéristiques respectives des informations rétroactives devant être transmises sur lesdits canaux communs de liaison montante.

8. Procédé selon la revendication 1, dans lequel les informations rétroactives sont contenues dans un message sélectionné à partir du groupe composé de :
un message de rapport de mesure qui comprend au moins l'un parmi une force de signal de réception d'un canal de liaison descendante, un rapport d'interférences signal/bruit et une perte de propagation du canal de liaison descendante ; un message de contrôle de vitesse de transmission qui comprend au moins l'un parmi un indicateur de code de canal de liaison descendante, une commande qui augmente ou diminue un facteur d'étalement, un indicateur de procédé de modulation de canal de liaison descendante et un indicateur de vitesse de transmission de données MBMS ; et un message de contrôle de puissance de transmission qui comprend au moins l'une parmi une commande pour augmenter ou diminuer la puissance du canal de liaison descendante, et des informations indiquant une valeur de puissance de transmission de la liaison descendante.

9. Procédé selon la revendication 1, comprenant en outre :
l'exécution de calculs mathématiques particuliers pour convertir les informations rétroactives en certaines valeurs de résultat ;
la comparaison des certaines valeurs de résultat à des valeurs de seuil particulières ; et
le contrôle de la transmission du service MBMS spécifique conformément à l'étape de comparaison.

10. Procédé selon la revendication 1, comprenant en outre :
la configuration du canal commun de liaison montante destiné à recevoir des informations rétroactives et d'un canal commun de liaison descendante destiné à transmettre les données en tant que support radio bidirectionnel unique ou en tant que supports radio unidirectionnels respectivement différents.

11. Procédé selon la revendication 1, comprenant en outre :
la demande que chaque terminal respectif utilise des techniques de répartition dans le temps ou de partage de temps et la réception des informations rétroactives de chaque terminal respectif pendant une période de temps respectivement différente.

12. Procédé réalisé par un terminal pour communication dans un système de communication sans fil comportant au moins une cellule, le procédé comprenant :
la réception de données depuis un réseau associé à au moins une cellule, les données étant associées à au moins un service MBMS et les données étant reçues en utilisant un canal de liaison descendante ;
**caractérisé par**
la réception depuis ledit réseau de demandes pour établir un canal commun de liaison montante différent pour chaque service MBMS particulier ;
l'établissement d'un canal commun de liaison montante différent pour chaque service MBMS particulier avec ledit réseau ; et
la transmission, via un canal commun de liaison montante qui a été établi pour un service MBMS particulier, d'informations rétroactives associées à une qualité des données reçues et associées au service MBMS particulier.

13. Procédé selon la revendication 12, dans lequel les canaux communs de liaison montante sont des canaux communs logiques, des canaux communs de transport ou des canaux communs physiques.

14. Procédé selon la revendication 12, dans lequel la qualité des données est associée à au moins l'un parmi une vitesse de transmission, une puissance de transmission, la perte de données, l'évanouissement de signal, la force du signal, le rapport signal/parasites et la perte de propagation.

15. Procédé selon la revendication 12, dans lequel les informations rétroactives comprennent au moins des informations sélectionnées à partir du groupe composé :
des informations associées à au moins l'un parmi le contrôle de vitesse de transmission, le contrôle de puissance de transmission, le code de canal, le facteur d'étalement et la modulation de canal ; et
des informations associées à un degré de perte pour les données à en-tête compressé.

16. Procédé selon la revendication 12, comprenant en outre :
l'utilisation de codes et paramètres respectivement différents destinés à transmettre des données par l'intermédiaire de différents canaux communs de liaison montante.

17. Procédé selon la revendication 12, dans lequel, sur demande depuis le réseau, différents canaux communs de liaison montante sont configurés différemment conformément aux caractéristiques respectives des informations rétroactives devant être transmises sur lesdits canaux communs de liaison montante.

18. Procédé selon la revendication 12, dans lequel les informations rétroactives sont contenues dans un message sélectionné à partir du groupe composé de :
un message de rapport de mesure qui comprend au moins l'un parmi une force de signal de réception d'un canal de liaison descendante, un rapport d'interférences signal/bruit et une perte de propagation du canal de liaison descendante ;
un message de contrôle de vitesse de transmission qui comprend au moins l'un parmi un indicateur de code de canal de liaison descendante, une commande qui augmente ou diminue un facteur d'étalement, un indicateur de procédé de modulation de canal de liaison descendante et un indicateur de vitesse de transmission de données MBMS ; et
un message de contrôle de puissance de transmission qui comprend au moins l'une parmi une commande pour augmenter ou diminuer la puissance du canal de liaison descendante et des informations indiquant une valeur de puissance de transmission de la liaison descendante.

19. Procédé selon la revendication 12, comprenant en outre :
la configuration du canal commun de liaison montante destiné à transmettre des informations rétroactives et d'un canal commun de liaison descendante destiné à recevoir les données en tant que support radio bidirectionnel unique ou en tant que supports radio unidirectionnels respectivement différents.

20. Procédé selon la revendication 12, comprenant en outre :
sur demande depuis le réseau, l'utilisation de techniques de répartition dans le temps ou de partage de temps et la transmission des données rétroactives des terminaux pendant une période de temps particulière.

21. Appareil pour communication dans un système de communication sans fil comportant au moins une cellule, l'appareil comprenant :
un module de transmission adapté pour transmettre des données vers une pluralité de terminaux dans la au moins une cellule, les données étant associées à au moins un service MBMS ;
**caractérisé par** :
un module de transmission adapté pour transmettre vers ladite pluralité de terminaux des demandes pour établir un canal commun de liaison montante différent pour chaque service MBMS particulier ;
un module de réception adapté pour recevoir, via un canal commun de liaison montante qui a été établi pour un service MBMS particulier, des informations rétroactives depuis au moins l'un parmi la pluralité de terminaux, les informations rétroactives étant associées à une qualité des données reçues par le au moins un terminal et étant associées au service MBMS particulier.

22. Terminal pour communication dans un système de communication sans fil comportant au moins une cellule et comprenant :
un module de réception adapté pour recevoir des données depuis un réseau associé à la au moins une cellule, les données étant associées à au moins un service MBMS et les données étant reçues en utilisant un canal de liaison descendante ;
**caractérisé par** :
un module de réception adapté pour recevoir depuis ledit réseau des demandes pour établir un canal commun de liaison montante différent pour chaque service MBMS particulier ;
un module destiné à établir un canal commun de liaison montante différent pour chaque service MBMS particulier avec ledit réseau ; et
un module de transmission adapté pour transmettre, via un canal commun de liaison montante qui a été établi pour un service MBMS particulier, des informations rétroactives associées à la qualité des données reçues par le module de réception et associées au service MBMS particulier.

23. Terminal selon la revendication 22, adapté en outre pour réaliser les étapes d'un procédé conformément à l'une quelconque des revendications 12 à 20.
